(19) Europäisches Patentamt / European Patent Office / Office européen des brevets

(11) **EP 1 236 258 B1**

(12) **EUROPÄISCHE PATENTSCHRIFT**

(45) Veröffentlichungstag und Bekanntmachung des Hinweises auf die Patenterteilung:
**14.04.2010 Patentblatt 2010/15**

(21) Anmeldenummer: **00989843.8**

(22) Anmeldetag: **05.12.2000**

(51) Int Cl.:
*H02H 7/26* *(2006.01)*

(86) Internationale Anmeldenummer:
**PCT/DE2000/004382**

(87) Internationale Veröffentlichungsnummer:
**WO 2001/043256 (14.06.2001 Gazette 2001/24)**

(54) **DIFFERENTIALSCHUTZVERFAHREN**

DIFFERENTIAL PROTECTIVE METHOD

PROCEDE DE PROTECTION DIFFERENTIELLE

(84) Benannte Vertragsstaaten:
**DE FR GB IT**

(30) Priorität: **07.12.1999 DE 19959776**

(43) Veröffentlichungstag der Anmeldung:
**04.09.2002 Patentblatt 2002/36**

(73) Patentinhaber: **SIEMENS AKTIENGESELLSCHAFT**
**80333 München (DE)**

(72) Erfinder:
• **PHILIPPOT, Luc**
**10823 Berlin (DE)**
• **NGOUNOU NGAMBO, Yves**
**Lasalle, Quebec**
**H8N 1P7 (CA)**
• **KERGER, Torsten**
**13629 Berlin (DE)**

(56) Entgegenhaltungen:
**US-A- 4 939 617**

• **ERNST L J ET AL: "CHARGE COMPARISON PROTECTION OF TRANSMISSION LINES - RELAYING CONCEPTS" IEEE TRANSACTIONS ON POWER DELIVERY,US,IEEE INC. NEW YORK, Bd. 7, Nr. 4, 1. Oktober 1992 (1992-10-01), Seiten 1834-1852, XP000298195 ISSN: 0885-8977 in der Anmeldung erwähnt**

## Beschreibung

Die Erfindung bezieht sich auf ein Verfahren zum Erzeugen eines einen Fehlerstrom eines mindestens zwei Leiterenden aufweisenden elektrischen Leiters kennzeichnenden Fehlersignals mit Ladungsmeßeinrichtungen, die über Datenleitungen untereinander verbunden sind und von denen an jedem Leiterende des Leiters jeweils eine angebracht ist, wobei bei dem Verfahren

- mit den Ladungsmeßeinrichtungen Ladungsmeßwerte gemessen werden, die jeweils die durch das jeweilige Leiterende während einer vorgegebenen Meßdauer geflossene Ladungsmenge angeben,
- mit den Ladungsmeßwerten unter Berücksichtigung der Richtung des Ladungsflusses durch Addition ein Gesamtladungmeßwert gebildet wird und
- das Fehlersignal erzeugt wird, wenn der Gesamtladungsmeßwert betragsmäßig einen an die jeweilige Meßsituation angepaßten Schwellenwert überschreitet.

Ein derartiges Verfahren ist aus der Druckschrift "Charge comparison protection of transmission lines - relaying concepts" (Ernst, Hinman, Quam, Thorp; IEEE Transaction on Power Delivery, Vol. 7, No. 4, Oct. 1992, Seiten 1834 bis 1846) bekannt. Bei diesem vorbekannten Verfahren wird an jedem Leiterende eines Leiters der jeweilige Strom unter Bildung von Stromabtastwerten abgetastet. Die Abtastwerte werden dabei in einem zeitlichen Abstand von 0,5 ms aufgenommen. Die dabei entstehenden Abtastwerte werden leiterendenindividuell unter Bildung von Ladungsmeßwerten integriert, wobei die Integrationsdauer einer halben Periodendauer des Stromes - es handelt es sich bei dem vorbekannten Verfahren um einen Wechselstrom mit einer Grundfrequenz von 60 Hz - entspricht. Die Integrationsintervalle beginnen und enden dabei stets bei Nulldurchgängen des Wechselstroms. Die in dieser Weise gebildeten Ladungsmeßwerte werden aufsummiert, und zwar zum einen unter Bildung einer skalaren Summe ("sum of absolute magnitudes"), indem die Ladungsmeßwerte ohne Berücksichtigung der jeweiligen Vorzeichen - also ohne Berücksichtigung des Ladungsflusses - aufsummiert werden, und zum anderen unter Bildung einer arithmetischen Summe ("absolute magnitude of the sum of the signed magnitudes") - nachfolgend hier Gesamtladungsmeßwert genannt - , indem die Ladungsmeßwerte mit Berücksichtigung der jeweiligen Vorzeichen aufsummiert werden. Das Fehlersignal wird dann erzeugt, wenn der Gesamtladungsmeßwert (arithmetische Summe) einen von der skalaren Summe abhängigen, also einen an die jeweilige Meßsituation angepaßten Schwellenwert überschreitet.

Weiterhin ist ein solches Verfahren aus der US-Patentschrift 4,939,617 bekannt. Bei diesem bekannten Verfahren wird ein Fehlersignal beim Auftreten eines internen Fehlers auf einer Energieübertragungsleitung erzeugt. Dazu werden an den beiden Enden des Leiters jeweils Strommesswerte erfasst und diese über eine Zeitdauer von einer halben Periode integriert. Die auf diese Weise erfassten Ladungsmesswerte werden über eine Kommunikationsleitung zwischen den Ladungsmessgeräten in beide Richtungen, also sowohl vom ersten Ladungsmessgerät zum zweiten Ladungsmessgerät als auch umgekehrt, übertragen. In den jeweiligen Messgeräten zugeordneten Auswerteeinrichtungen wird jeweils ein Auslösewert ("restraint value") als Summe aus dem Ladungsmesswert des ersten Messgerätes und dem Ladungsmesswert des zweiten Messgerätes gebildet, indem die Messwerte ohne Berücksichtigung ihrer jeweiligen Vorzeichen addiert werden. Außerdem wird ein Vergleichswert ("operate value") als Summe durch vorzeichenrichtige Addition der beiden Ladungsmesswerte gebildet. Dieser Vergleichswert wird mit einem Faktor, beispielsweise 3, unter Bildung eines gewichteten Vergleichswertes multipliziert. Ein einen internen Fehler auf der Energieübertragungsleitung angebendes Fehlersignal wird dann erzeugt, wenn der Vergleichswert einen Wert annimmt, der größer ist als der Auslösewert.

Der Erfindung liegt die Aufgabe zugrunde, ein Verfahren der eingangs beschriebenen Art dahingehend fortzuentwickeln, das mit diesem Fehler noch empfindlicher erfasst werden können als bisher.

Diese Aufgabe wird bei einem Verfahren der eingangs angegebenen Art erfindungsgemäß durch die im Kennzeichnenden Teil von Anspruch 1 definierten Merkmale erreicht.

Ein wesentlicher Vorteil des erfindungsgemäßen Verfahrens besteht darin, daß mit diesem besonders empfindlich Fehler erkannt werden können; denn bei dem erfindungsgemäßen Verfahren wird der Schwellenwert unter Berücksichtigung der individuellen Meßtoleranz der einzelnen Ladungsmeßeinrichtungen gebildet. Dies ermöglicht bei dem erfindungsgemäßen Verfahren konkret, daß berücksichtigt werden kann, wenn beispielsweise eine sehr ungenaue arbeitende Ladungsmeßeinrichtung einen sehr großen Ladungsmeßwert mißt und damit zwangsläufig auch einen besonders großen Meßfehler erzeugt; denn das erfindungsgemäße Verfahren berücksichtigt die individuelle Meßtoleranz einer jeden Ladungsmeßeinrichtung.

Gemäß dem erfindungsgemäßen Verfahren ist vorgesehen, daß mit den Ladungsmeßeinrichtungen zunächst der durch die jeweiligen Leiterenden fließende Strom gemessen wird und durch analoge oder digitale Integration der dabei gebildeten Strommeßwerte über die Meßdauer jeweils die Ladungsmeßwerte gebildet werden. Bei dieser Weiterbildung des erfindungsgemäßen Verfahrens ist also vorgesehen, daß die Ladungsmeßwerte durch Integration von Strommeßwerten gebildet werden, wodurch konkret ermöglicht wird, daß zur Bildung der Ladungsmeßwerte übliche Strommeßeinrichtungen eingesetzt werden können.

Besonders einfach und damit vorteilhaft läßt sich hierbei die individuelle Meßtoleranz der einzelnen Ladungsmeßeinrichtungen berücksichtigen, wenn für jedes Leiterende jeweils der maximale Strommeßwert innerhalb der Meßdauer bestimmt wird, die maximalen Strommeßwerte jeweils mit einem die Meßdauer angebenden Meßdauer-Wert unter Bildung fiktiver momentaner Maximalladungsmeßwerte multipliziert werden, die Beträge der Maximalladungsmeßwerte jeweils mit der individuellen Meßtoleranz der jeweiligen Ladungsmeßeinrichtung gewichtet und unter Bildung eines Gesamtstrommeßfehlers aufsummiert werden und der Schwellenwert derart gewählt wird, daß er stets mindestens so groß ist wie der Gesamtstrommeßfehler; hierbei wird also die individuelle Meßtoleranz der einzelnen Ladungsmeßeinrichtungen unter besonderer Heranziehung fiktiver momentaner Maximalladungsmeßwerte berücksichtigt, wodurch ein fehlerhaftes Erzeugen des Fehlersignals besonders zuverlässig vermieden wird.

Bei dem erfindungsgemäßen Verfahren ist - wie oben beschrieben - vorgesehen, daß die Ladungsmeßwerte durch Integration von Strommeßwerten gebildet werden; besonders zuverlässig läßt sich hierbei das Fehlersignal erzeugen, wenn der durch die Integration der Strommeßwerte auftretende Integrationsfehler in jeder der Ladungsmeßeinrichtungen aufsummiert wird, der resultierende Gesamtintegrationsfehler zu dem Gesamtstrommeßfehler unter Bildung eines Gesamtmeßfehlers addiert wird und der Schwellenwert derart gewählt wird, daß er stets mindestens so groß ist wie der Geamtmeßfehler; denn bei dieser Ausgestaltung des erfindungsgemäßen Verfahrens wird zusätzlich zu der individuellen Meßtoleranz der Ladungsmeßeinrichtung auch der Integrationsfehler bei der Integration der Strommeßwerte berücksichtigt.

Im übrigen wird es als vorteilhaft angesehen, wenn zusätzlich der Synchronisierungsfehler bei der Bildung der Ladungsmeßwerte berücksichtigt wird; es wird also konkret vorgeschlagen, daß der durch fehlerhafte Synchronisation der Ladungsmeßeinrichtungen maximal auftretende Synchronisationsfehler ermittelt wird, der resultierende Synchronisationsfehler zu dem Gesamtmeßfehler unter Bildung eines Gesamt-Systemfehlers addiert wird und der Schwellenwert derart gewählt wird, daß er stets mindestens so groß ist wie der Gesamt-Systemfehler.

Um sicherzustellen, daß auch bei sehr kleinen Gesamtladungsmeßwerten ein fehlerhaftes Erzeugen des Fehlersignals vermieden wird, wird es darüber hinaus als vorteilhaft angesehen, wenn das Fehlersignal erzeugt wird, wenn der Gesamtladungsmeßwert einen fest vorgegebenen Mindestschwellenwert und den Gesamtsystemfehler überschreitet; bei dieser Ausgestaltung des erfindungsgemäßen Verfahrens wird nämlich vermieden, daß es zu einem Erzeugen des Fehlersignals kommt, wenn insgesamt nur sehr geringe Strom- bzw. Ladungsmeßwerte vorliegen.

Im übrigen wird es als vorteilhaft angesehen, wenn die Messung der Ladungsmeßwerte in der Weise regelmäßig wiederholt wird, daß der zeitliche Abstand zwischen jeweils zwei aufeinander folgenden Messungen kleiner ist als die vorgegebene Meßdauer. Ein wesentlicher Vorteil dieser Variante des erfindungsgemäßen Verfahrens besteht darin, daß mit diesem besonders zuverlässig Fehler erkannt werden können; denn im Unterschied zu dem vorbekannten, eingangs beschriebenen Verfahren werden die Messungen der Ladungsmeßwerte nicht getrennt nacheinander, sondern zeitlich überlappend durchgeführt. Dadurch wird konkret erreicht, daß pro Periode deutlich mehr Ladungsmeßwerte erfaßt werden und somit eine noch größere "Datenbasis" für die Fehlererkennung zur Verfügung steht als bisher. Dies soll anhand eines Zahlenbeispiels verdeutlicht werden: Bei dem vorbekannten Verfahren werden die Ladungsmeßwerte stets bezogen auf eine halbe Periodenlänge gebildet, so daß - pro Periode - maximal zwei Ladungsmeßwerte pro Leiterende zur Auswertung zur Verfügung stehen; im Unterschied hierzu werden bei dem erfindungsgemäßen Verfahren die Ladungsmeßwerte mit zeitlich überlappenden Meßfenstern gebildet, wodurch je nach dem Grad der vorgegebenen Überlappung quasi beliebig viele Ladungsmeßwerte gebildet werden können. Dies führt insgesamt zu einer größeren Datenmenge bzw. Datenbasis, die ausgewertet werden kann, und damit zu einer größeren Zuverlässigkeit beim Bilden des Fehlersignals.

Werden die Ladungsmeßwerte durch Integration von Strommeßgrößen (analog oder digital) gebildet, die mit Stromwandlern erzeugt wurden, so kann es zu Meßfehlern durch Stromwandlersättigung kommen; um Meßfehler durch Stromwandlersättigung zu vermeiden, wird es als vorteilhaft angesehen, wenn die vorgegebene Meßdauer - also das Meßfenster für die Messung der Ladungsmengen - deutlich kleiner ist als die halbe Periodendauer des Stromes, damit ggf. das Fehlersignal erzeugt werden kann, bevor die Stromwandler in Sättigung gehen. Erfindungsgemäß wird konkret vorgeschlagen, daß die vorgegebene Meßdauer etwa einem Viertel der Periodendauer des Stromes entspricht; denn eine solche Meßfensterlänge ist lang genug, um gute verwertbare Ladungsmeßwerte zu erhalten, und wiederum kurz genug, um zuverlässig vor Eintritt von Stromwandlersättigung das Meßsignal erzeugen zu können.

Für die Durchführung des erfindungsgemäßen Verfahrens wird es dabei als vorteilhaft angesehen, wenn der zeitliche Abstand zwischen zwei zeitlich teilweise überlappenden Messungen etwa halb so groß sind wie die vorgegebene Meßdauer (gleich Länge des Meßfensters); konkret bedeutet dies bei einer Meßfensterlänge, die einem Viertel der Periodendauer des Stromes entspricht, daß ca. 8 Ladungsmeßwerte pro Periode erzeugt werden, wodurch im allgemeinen eine ausreichende Zuverlässigkeit bei der Bildung des Fehlersignals erreicht wird.

Wird der Gesamtladungsmeßwert in einer der Ladungsmeßeinrichtungen gebildet, also in einer ausgewählten Ladungsmeßeinrichtung, so wird es gemäß einer Weiterbildung des erfindungsgemäßen Verfahrens als vorteilhaft angesehen, wenn bei einem Leiter mit mindestens drei Leiterenden zu der ausgewählten Ladungsmeßeinrichtung ein Zwischenwert Ladungsmeßeinrichtungen durch Addition vorab gebildet ist, und der Gesamtladungsmeßwert mit dem Ladungsmeßwert der ausgewählten Ladungsmeßeinrichtung und mit dem Zwischenwert durch Addition gebildet wird; denn gemäß dieser Weiterbildung wird Datenrate eingespart, weil zu der ausgewählten Ladungsmeßeinrichtung nicht die Ladungsmeßwerte aller übrigen Ladungsmeßeinrichtungen - also eine Vielzahl von Meßwerten - übertragen werden müssen, sondern lediglich ein einziger Meßwert, nämlich der Zwischenwert.

Alternativ wird es als vorteilhaft angesehen, wenn bei einem Leiter mit mindestens drei Leiterenden zu der ausgewählten Ladungsmeßeinrichtung zwei Zwischenwerte übertragen werden, und zwar ein erster, der aus den Ladungsmeßwerten einer ersten Gruppe der übrigen Ladungsmeßeinrichtungen durch Addition gebildet ist, und ein zweiter Zwischenwert, der aus den Ladungsmeßwerten einer zweiten Gruppe der übrigen Ladungsmeßeinrichtungen durch Addition gebildet ist, wobei die zweite Gruppe alle Ladungsmeßeinrichtungen außer der ausgewählten Ladungsmeßeinrichtung und den Ladungsmeßeinrichtungen der ersten Gruppe enthält, der Gesamtladungsmeßwert mit dem Ladungsmeßwert der ausgewählten Ladungsmeßeinrichtung und den beiden Zwischenwerten durch Addition gebildet wird; diese alternative Weiterbildung des erfindungsgemäßen Verfahrens läßt sich insbesondere dann vorteilhaft einsetzen, wenn die Ladungsmeßeinrichtungen zum Datenaustausch datenleitungsmäßig unter Bildung einer "Kette" untereinander verbunden sind und die ausgewählte Ladungsmeßeinrichtung ein inneres Kettenglied dieser so gebildeten Kette ist.

Das Prinzip der "Zwischenwertbildung" läßt sich auch auf die Meßfehler der Ladungsmeßeinrichtungen vorteilhaft in entsprechender Weise übertragen; dies ist in den beiden letzten Unteransprüchen 14 und 15 beschrieben.

Zur Erläuterung der Erfindung zeigt

Figur 1 ein Ausführungsbeispiel für eine Anordnung zur Durchführung des erfindungsgemäßen Verfahrens,
Figur 2 ein zweites Ausführungsbeispiel für eine Anordnung zur Durchführung des erfindungsgemäßen Verfahrens und
Figur 3 ein Ausführungsbeispiel für eine Ladungsmeßeinrichtung zur Durchführung des erfindungsgemäßen Verfahrens.

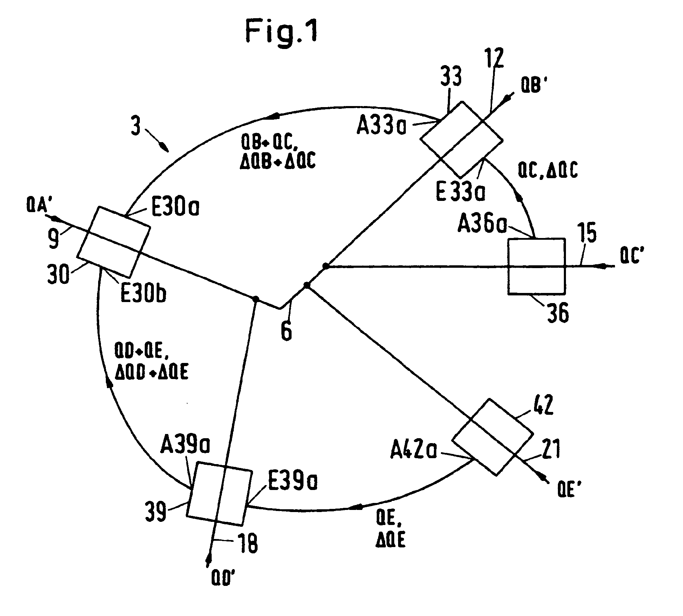

Figur 1 zeigt eine Anordnung 3 zum Überwachen eines elektrischen Leiters 6 auf einen Fehlerstrom. Der elektrische Leiter 6 weist insgesamt fünf Leiterenden auf, und zwar ein erstes Leiterende 9, ein zweites Leiterende 12, ein drittes Leiterende 15, ein viertes Leiterende 18 sowie ein fünftes Leiterende 21. An jedem der Leiterenden 9, 12, 15, 18 und 21 ist jeweils eine Ladungsmeßeinrichtung angebracht, wobei die Ladungsmeßeinrichtungen über Datenleitungen - beispielsweise optische Glasfasern - miteinander verbunden sind. Dabei ist an das erste Leiterende 9 eine ausgewählte erste Ladungsmeßeinrichtung 30 und an die übrigen Leiterenden 12, 15, 18 und 21 jeweils eine weitere Ladungsmeßeinrichtung 33, 36, 39 und 42 angeschlossen.

Konkret ist die erste Ladungsmeßeinrichtung 30 mit Ihrem Meßwerteingang E30a mit einem Meßwertausgang A33a der ersten weiteren Ladungsmeßeinrichtung 33 - im weiteren kurz als zweite Ladungsmeßeinrichtung 33 bezeichnet - verbunden. Dieser ist an einem Meßwerteingang E33a die zweite der weiteren Ladungsmeßeinrichtungen 36 - im weiteren kurz als dritte Ladungsmeßeinrichtung 36 bezeichnet - mit Ihrem Meßwertausgang A36a vorgeordnet.

Die erste Ladungsmeßeinrichtung 30 ist außerdem mit einem weiteren Meßwerteingang E30b mit einem Meßwertausgang A39a der dritten der weiteren Ladungsmeßeinrichtungen 39 - im weiteren kurz als vierte Ladungsmeßeinrichtung 39 bezeichnet- verbunden. Dieser ist an einem Meßwerteingang E39a die vierte der weiteren Ladungsmeßeinrichtungen 42 - im weiteren kurz als fünfte Ladungsmeßeinrichtung 42 bezeichnet - mit Ihrem Meßwertausgang A42a vorgeordnet.

Die fünf Ladungsmeßeinrichtungen 30, 33, 36, 39 und 42 sind also in einer kettenförmigen Struktur untereinander verbunden, wobei die dritte Ladungsmeßeinrichtung 36 und die fünfte Ladungsmeßeinrichtung 42 in der Kette außenliegende Ladungsmeßeinrichtungen und die erste Ladungsmeßeinrichtung 30, die zweite Ladungsmeßeinrichtung 33 und die vierte Ladungsmeßeinrichtung 39 in der Kette innenliegende Ladungsmeßeinrichtungen bilden.

Mit der Anordnung 3 wird der elektrische Leiter 6 in nachfolgend beschriebener Weise auf einen Fehlerstrom hin überwacht.

Mit einem nicht dargestellten Taktgenerator wird an alle Ladungsmeßeinrichtungen ein Taktsignal $T_A$ übermittelt. Mit diesem Taktsignal $T_A$ wird sichergestellt, daß alle Ladungsmeßeinrichtungen die durch ihr jeweiliges Leiterende während einer vorgegebenen Meßdauer geflossene Ladungsmenge jeweils zeitsynchron, also zu gleichen Zeitpunkten ermitteln.

Nachdem nun von allen Ladungsmeßeinrichtungen zu einem Zeitpunkt die Ladungsmengen bzw. Ladungen QA',..., QE' in ihren jeweiligen Leiterenden 9, 12, 15, 18, 21 gemessen wurden, wird wie folgt vorgegangen:

Der der Ladung QC' im Leiterende 15 entsprechende Ladungsmeßwert IC der dritten Ladungsmeßeinrichtung 36 wird am Meßwertausgang A36a der dritten Ladungsmeßeinrichtung 36 abgegeben und zum Meßwerteingang E33a der zweiten Ladungsmeßeinrichtung 33 übertragen. Diese zweite Ladungsmeßeinrichtung 33 addiert zu dem der durch ihr Leiterende 12 fließenden Ladung QB' entsprechenden Ladungsmeßwert QB den von der dritten Ladungsmeßeinrichtung 36 übertragenen Ladungsmeßwert QC unter Bildung eines Summenladungsmeßwertes QC+QB mit einer in der Figur 1 nicht dargestellten Recheneinheit. Dieser Summenladungsmeßwert QC+QB wird von der zweiten Ladungsmeßeinrichtung 33 zu der ersten Ladungsmeßeinrichtung 30 übertragen.

Die fünfte Ladungsmeßeinrichtung 42 am fünften Leiterende 21 sowie die vierte Ladungsmeßeinrichtung 39 am vierten Leiterende 18 arbeiten genauso wie die zweite und die dritte Ladungsmeßeinrichtung, d. h., daß sie jeweils den Ladungsmeßwert der eigenen Ladungsmeßeinrichtung zu einem an ihrem Meßwerteingang anliegenden Ladungsmeßwert der ggf. jeweils vorgeordneten Ladungsmeßeinrichtung unter Berücksichtigung der jeweiligen Ladungsflußrichtung vorzeichenrichtig addieren und den resultierenden Summenladungsmeßwert an ihrem Meßwertausgang als Meßwert abgeben.

Zu dem einen Meßwerteingang E30a der ersten Ladungsmeßeinrichtung 30 gelangt also ein erster Zwischenwert, der sich aus den Ladungsmeßwerten QB und QC zusammensetzt, und zu dem weiteren Meßwerteingang E30b der ersten Ladungsmeßeinrichtung 30 gelangt ein zweiter Zwischenwert, der sich aus den Ladungsmeßwerten QE und QD zusammensetzt.

In der ersten Ladungsmeßeinrichtung 30 wird daraufhin durch Addition des ersten und des zweiten Zwischenwertes sowie des die Ladung QA' im Leiterende 9 angebenden Ladungsmeßwertes QA ein Gesamtladungsmeßwert gebildet; dieser Gesamtladungsmeßwert ist gleich QA+QB+QC+QD+QE.

Der Gesamtladungsmeßwert QA+QB+...+QE muß den Kirchhoff'schen Gesetzen zufolge gleich Null sein, wenn kein Fehlerstrom aufgetreten ist; ist der Gesamtladungsmeßwert ungleich Null bzw. überschreitet er einen vorgegebenen Schwellenwert, so ist ein Fehlerstrom aufgetreten. Unter einem Fehlerstrom wird dabei ein Strom verstanden, der an einer Fehlerstelle, beispielsweise einer Kurzschlußstelle, also nicht an einem der Leiterenden 9,12,15,18 bzw. 21 von der Leitung 6 abfließt oder in die Leitung 6 eingespeist wird. Beide Arten von Fehlerströmen schlagen sich in dem Gesamtladungsmeßwert der Ladungsmeßeinrichtung 30 nieder, was durch Vergleich des Gesamtladungsmeßwertes mit einem Schwellenwert, der ungefähr gleich Null ist, festgestellt werden kann. Überschreitet der Gesamtladungsmeßwert den vorgegebenen Schwellenwert, so wird von der Ladungsmeßeinrichtung 30 ein Fehlersignal erzeugt.

Zusammenfassend wird also anhand des Gesamtladungsmeßwertes in der ausgewählten, ersten Ladungsmeßeinrichtung 30 durch Vergleich mit dem Schwellenwert festgestellt, ob ein Fehlerstrom aufgetreten ist; dabei läßt sich beispielsweise in einem Gleichstromsystem nicht nur feststellen, ob überhaupt ein Fehler aufgetreten ist, sondern zusätzlich natürlich auch, welcher Art der Fehler ist, wenn nach dem Betragsvergleich des Gesamtladungsmeßwertes mit dem vorgegebenem Schwellenwert noch zusätzlich das jeweilige Vorzeichen des Gesamtladungsmeßwertes ausgewertet wird. Das Vorzeichen gibt nämlich - je nach seiner Zuordnung zu einer Stromrichtung an - , ob der Fehlerstrom in die Leitung 6 hinein- oder herausgeflossen ist.

Der Schwellenwert, mit dem der Gesamtladungsmeßwert QA+...QE verglichen wird, kann beispielsweise fest vorgegeben sein. Um jedoch besonders zuverlässig Fehlersignale erzeugen zu können, wird es als günstig angesehen, wenn der Schwellenwert der jeweiligen "Meßsituation" automatisch angepaßt wird; dies läßt sich dadurch erreichen, daß der Schwellenwert leiterendenindividuell an die Genauigkeit der Ladungsmeßeinrichtungen (insbesondere auch der zugeordneten Stromwandler) angepaßt wird. Konkret soll das Fehlersignal daher gebildet werden, wenn der Gesamtladungsmeßwert QA+...QE größer ist als eine fest vorgegebene Mindestschwelle Qmin und größer ist als ein Gesamtsystemfehler ∆Qdiff. Unter dem Begriff Gesamtsystemfehler wird ein Fehler verstanden, der durch eine Abschätzung des maximal möglichen Meßfehlers der gesamten Meßanordnung gebildet ist. Der Gesamtsystemfehler ∆Qdiff soll dabei gebildet werden gemäß

$$\Delta Qdiff = \sum_{\substack{alle\,Ladungsme\beta-\\einrichtungen}} \Delta Qdiff_{\substack{Gesamtfehler\\der\,jeweiligen\\Ladungsme\beta-\\einrichtung}} + \sum_{\substack{alle\,Verbin-\\dungen}} \Delta Qdiff_{Synchronisierung}$$

Der Anteil ∆Qdiff$_{Synchronisierung}$ berücksichtigt dabei Synchronisierungsfehler beim Synchronisieren der Ladungsmeßeinrichtungen; derartige Fehler treten dann auf, wenn die Ladungsmeßwerte nicht zeitsynchron gemessen werden.

Der Anteil ∆Qdiff$_{Gesamtfehler\ der\ jeweiligen\ Ladungsme\beta einrichtung}$ gibt den Meßfehler der jeweiligen Ladungsmeßeinrichtung an. Dieser Meßfehler ∆Qdiff$_{Gesamtfehler\ der\ jeweiligen\ Ladungsme\beta einrichtung}$ setzt sich wiederum zusammen aus zwei Anteilen, nämlich:

$$\Delta Qdiff_{\substack{Gesamtfehler \\ der\ jeweiligen \\ Ladungsmeß- \\ einrichtung}} = \Delta Qdiff_{Meßfehler} + \Delta Qdiff_{Integration}$$

$$mit \quad \Delta Qdiff_{Meßfehler} = k \cdot T \cdot \underset{Meß\,\mathrm{int}\,ervall}{MAX}\left[\frac{|i|}{I_{nenn}}\right]$$

wobei k ein die Meßungenauigkeit (Toleranz) der jeweiligen Ladungsmeßeinrichtung angebender Parameter ist, T die Länge des Meßintervalls (Meßfensters) bei der Ladungsmessung bezeichnet und $\underset{Meß\,\mathrm{int}\,ervall}{MAX}\left[\frac{|i|}{I_{nenn}}\right]$ den auf den Nennstrom $I_{nenn}$ bezogenen (nomierten) maximalen Stromwert im Meßintervall angibt. $\Delta Qdiff_{Meßfehler}$ bezeichnet dabei also den auf die Meßungenauigkeit k bei der Strommessung zurückgehenden Anteil am Gesamtfehler der jeweiligen Ladungsmeßeinrichtung; dieser wächst bei steigendem Strom abhängig von der individuellen Meßungenauigkeit k der jeweiligen Ladungsmeßeinrichtung an.

Der Anteil $\Delta Qdiff_{Integration}$ am Gesamtfehler der jeweiligen Ladungsmeßeinrichtung berücksichtigt den je nach Integrationsverfahren auftretenden Integrationsfehler, der wiederum ladungsmeßeinrichtungsindividuell unterschiedlich sein kann; der Anteil $\Delta Qdiff_{Integration}$ ist natürlich nur dann relevant, wenn die Ladungsmeßwerte durch Integration von Strommeßwerten gewonnen werden.

Damit in der Ladungsmeßeinrichtung 30 der Gesamtsystemfehler $\Delta Qdiff$ gebildet werden kann, müssen hierzu die ladungsmeßeinrichtungsindividuellen "Meßfehler" $\Delta Qdiff_{Meßfehler} + \Delta Qdiff_{Integration}$ ermittelt und zu der Ladungsmeßeinrichtung 30 übermittelt werden. Wie dies geschieht, soll nun nachfolgend erläutert werden. Hierzu werden folgende Abkürzungen eingeführt:

$$\Delta QA = \Delta Qdiff_{\substack{Meßfehler\ der \\ Ladungsmeß- \\ einrichtung\ 30}} + \Delta Qdiff_{\substack{Integrationsfehler \\ der\ Ladungsmeß- \\ einrichtung\ 30}}$$

$$\Delta QB = \Delta Qdiff_{\substack{Meßfehler\ der \\ Ladungsmeß- \\ einrichtung\ 33}} + \Delta Qdiff_{\substack{Integrationsfehler \\ der\ Ladungsmeß- \\ einrichtung\ 33}}$$

$$\Delta QC = \Delta Qdiff_{\substack{Meßfehler\ der \\ Ladungsmeß- \\ einrichtung\ 36}} + \Delta Qdiff_{\substack{Integrationsfehler \\ der\ Ladungsmeß- \\ einrichtung\ 36}}$$

$$\Delta QD = \Delta Q diff_{\substack{Me\beta fehler\ der \\ Ladungsme\beta - \\ einrichtung\ 39}} + \Delta Q diff_{\substack{Integrationsfehler \\ der\ Ladungsme\beta - \\ einrichtung\ 39}}$$

$$\Delta QE = \Delta Q diff_{\substack{Me\beta fehler\ der \\ Ladungsme\beta - \\ einrichtung\ 42}} + \Delta Q diff_{\substack{Integrationsfehler \\ der\ Ladungsme\beta - \\ einrichtung\ 42}}$$

In jedem der Ladungsmeßgeräte wird nun neben dem jeweiligen Ladungsmeßwert QA, QB,...QD also ebenfalls gemäß obigen Festlegungen der jeweilige Meßfehler $\Delta$QA, $\Delta$QB, $\Delta$QC, $\Delta$QD und $\Delta$QE gebildet und jeweils genauso behandelt wie der jeweilige Ladungsmeßwert. Dies bedeutet konkret, daß die dritte Ladungsmeßeinrichtung 36 ihren Meßfehler $\Delta$QC zu der zweiten Ladungsmeßeinrichtung 33 überträgt. Diese addiert zu dem empfangenen Meßfehler $\Delta$QC den eigenen Meßfehler $\Delta$QB und überträgt die Meßfehlersumme $\Delta$QB + $\Delta$QC zu der ersten Ladungsmeßeinrichtung 30. In gleicher Weise empfängt die erste Ladungsmeßeinrichtung 30 die Meßfehlersumme $\Delta$QD +$\Delta$QE der Meßfehler der vierten und fünften Ladungsmeßeinrichtung 39 und 42.

In der ersten Ladungsmeßeinrichtung 30 kann dann der "Gesamtmeßfehler" $\Delta$Qgesamt der Ladungsmeßeinrichtungen gebildet werden gemäß

$$\Delta Q_{gesamt} = \Delta QA + \Delta QB + \Delta QC + \Delta QD + \Delta QE$$

Zu dem Gesamtmeßfehler $\Delta Q_{gesamt}$ muß dann zur Bildung des Gesamtsystemfehlers $\Delta Q_{diff}$ noch der Synchronisierungsfehler hinzugezählt werden gemäß:

$$\Delta Q diff = \Delta Q gesamt + \sum_{alle\ Verbindungen} \Delta Q diff_{Synchronisierung}$$

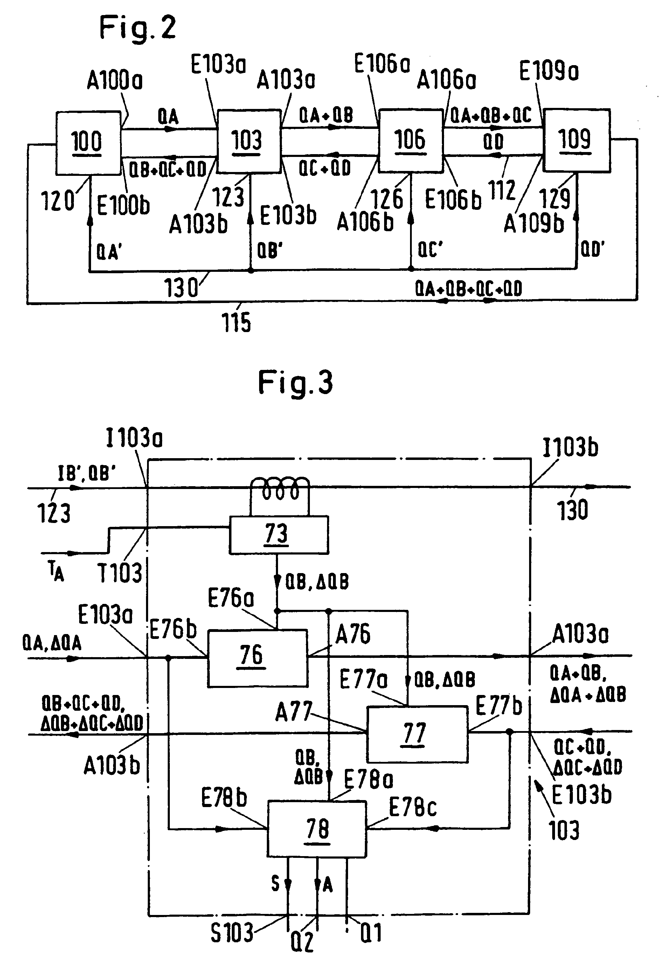

Die Berechnung des Synchronisierungsfehlers wird im Zusammenhang mit der Figur 3 erläutert.

Liegt der Gesamtsystemfehler $\Delta Q_{diff}$ in der ersten Ladungsmeßeinrichtung 30 vor, so wird der Gesamtladungsmeßwert QA +...QE mit einem vorgegebenen Mindestschwellenwert $Q_{min}$ und mit dem Gesamtsystemfehler $\Delta Q_{diff}$ verglichen, und es wird das Fehlersignal erzeugt, wenn gilt:

$$QA + ... QE > Q_{min}$$

und

$$QA + ... QE > \Delta Q_{diff}$$

Figur 2 zeigt ein zweites Ausführungsbeispiel für eine Anordnung, mit der das erfindungsgemäße Verfahren durchgeführt werden kann. Man erkennt Ladungsmeßeinrichtungen 100, 103, 106 und 109, die elektrisch mittels Datenleitungen 112 in einer kettenförmigen Struktur untereinander verbunden sind; dabei liegen zwei Ladungsmeßeinrichtungen, und zwar die Ladungsmeßeinrichtungen 100 und 109, am äußeren Ende der Kette und zwei Ladungsmeßeinrichtungen, und zwar die Ladungsmeßeinrichtungen 103 und 106, im Innern der Kette.

Die erste innenliegende Ladungsmeßeinrichtung 103 ist mit ihrem Meßwerteingang E103a mit einem Meßwertausgang A100a der ihr vorgeordneten Ladungsmeßeinrichtung 100 verbunden. Der ersten innenliegenden Ladungsmeßeinrichtung 103 ist an ihrem Meßwertausgang A103a ein Meßwerteingang E106a der zweiten innenliegenden Ladungsmeßeinrichtung 106 nachgeordnet der wiederum an ihrem Meßwertausgang A106a ein Meßwerteingang E109a der zweiten außenliegenden Ladungsmeßeinrichtung 109 nachgeschaltet ist. Die zweite außenliegende Ladungsmeßeinrichtung 109 weist außerdem einen Meßwertausgang A109b auf, der mit einem weiteren Meßwerteingang E106b der zweiten innenliegenden Ladungsmeßeinrichtung 106 verbunden ist; diese zweite innenliegende Ladungsmeßeinrichtung 106 ist mit einem weiteren Meßwertausgang A106b außerdem an einen weiteren Meßwerteingang E103b der ersten innenliegenden Ladungsmeßeinrichtung 103 angeschlossen. Mit einem weiteren Meßwertausgang A103b ist diese erste innenliegende Ladungsmeßeinrichtung 103 auch mit einem Meßwerteingang E100b der ersten außenliegenden Ladungsmeßeinrichtung 100 verbunden.

Außerdem besteht eine weitere Datenleitung 115, und zwar eine Duplexleitung, zwischen der ersten außenliegenden Ladungsmeßeinrichtung 100 und der zweiten außenliegenden Ladungsmeßeinrichtung 109.

Jede der Ladungsmeßeinrichtungen 100, 103, 106 und 109 ist darüber hinaus jeweils an ein Leiterende der vier Leiterenden 120, 123, 126 und 129 aufweisenden elektrischen Leitung 130 - in der Figur 2 nur schematisch angedeutet - angeschlossen und mißt die durch ihr Leiterende fließende Ladung QA', QB', QC' oder QD' unter Bildung von Ladungsmeßwerten QA, QB, QC oder QD; dabei mißt die erste außenliegende Ladungsmeßeinrichtung 100 den Ladungsmeßwert bzw. die Ladungsmeßwerte QA am ersten Leiterende 120, die erste innenliegende Ladungsmeßeinrichtung 103 den Ladungsmeßwert bzw. die Ladungsmeßwerte QB am zweiten Leiterende 123, die zweite innenliegende Ladungsmeßeinrichtung 106 den Ladungsmeßwert bzw. die Ladungsmeßwerte QC am dritten Leiterende 126 und die zweite außenliegende Ladungsmeßeinrichtung 109 den Ladungsmeßwert bzw. die Ladungsmeßwerte QD am vierten Leiterende 129.

Die Anordnung gemäß Figur 2 wird wie folgt betrieben: Der mit der ersten außenliegenden Ladungsmeßeinrichtung 100 gemessene Ladungsmeßwert QA wird zu dem einen Meßwerteingang E103a der ersten innenliegenden Ladungsmeßeinrichtung 103 über die Datenleitung 112 übertragen. In dieser wird aus ihrem eigenen Ladungsmeßwert QB und aus dem Meßwert QA der ersten außenliegenden Ladungsmeßeinrichtung 100 ein Summenladungsmeßwert QA+QB gebildet, der als Meßwert QA+QB zu dem einen Meßwerteingang E106a der zweiten innenliegenden Ladungsmeßeinrichtung 106 übertragen wird. In der zweiten innenliegenden Ladungsmeßeinrichtung 106 wird aus dem Meßwert QA+QB und ihrem eigenen Ladungsmeßwert QC ein neuer Summenladungsmeßwert QA+QB+QC gebildet, der als Meßwert zu dem einen Meßwerteingang E109a der zweiten außenliegenden Ladungsmeßeinrichtung 109 übermittelt wird. In dieser Ladungsmeßeinrichtung 109 wird aus dem Meßwert QA+QB+QC und ihrem eigenen Ladungsmeßwert QD ein Gesamtstromwert QA+QB+QC+QD gebildet; die Ladungsmeßeinrichtung 109 erzeugt an einem nicht dargestellten Steuerausgang ein Fehlersignal S für einen Fehlerstrom, wenn der Gesamtstromwert QA+QB+QC+QD den vorgegebenen Mindestschwellenwert $Q_{min}$ und den Gesamtsystemfehler $\Delta Q_{diff}$ überschreitet. Der Gesamtsystemfehler wird dabei genauso ermittelt wie es im Zusammenhang mit der Figur 1 erläutert wurde, nämlich unter Berücksichtigung der ladungsmeßgeräteindividuellen Meßfehler $\Delta$QA, $\Delta$QB, ... $\Delta$QD sowie des auftretenden Synchronisierungsfehlers. Um dies zu ermöglichen, müssen natürlich die entsprechenden ladungsmeßgeräteindividuellen Meßfehler $\Delta$QA, $\Delta$QB, ... $\Delta$QD jeweils mit den Ladungswerten QA, QB, ...QD mitübertragen werden, wie dies im Zusammenhang mit der Figur 1 erläutert wurde; in der Figur 2 ist der Übersichtlichkeit halber auf die Angabe der entsprechenden Bezugszeichen $\Delta$QA, $\Delta$QB, ... $\Delta$QD verzichtet worden.

Gleichzeitig wird der Ladungsmeßwert QD der zweiten außenliegenden Ladungsmeßeinrichtung 109 als weiterer Meßwert zu dem weiteren Meßwerteingang E106b der zweiten innenliegenden Ladungsmeßeinrichtung 106 übertragen. In der zweiten innenliegenden Ladungsmeßeinrichtung 106 liegt nun also an dem einen Meßwerteingang E106a der eine Meßwert QA+QB der ersten innenliegenden Ladungsmeßeinrichtung 103 und an dem weiteren Meßwerteingang E106b der weitere Meßwert QD vor. Aus den beiden Meßwerten und ihrem eigenen gemessenen Ladungsmeßwert QC wird in der Ladungsmeßeinrichtung 106 der Gesamtladungsmeßwert QA+QB+QC+QD gebildet, und es wird das Fehlersignal gebildet, sobald der Gesamtladungsmeßwert QA+QB+QC+QD den vorgegebenen Mindestschwellenwert $Q_{min}$ und den Gesamtsystemfehler $\Delta Q_{diff}$ überschreitet; das Fehlersignal S wird dann an einem nicht dargestellten Steuerausgang abgegeben. In der Ladungsmeßeinrichtung 106 wird aus dem an dem weiteren Meßwerteingang E106b anliegenden weiteren Meßwert QD und ihrem eigenen Ladungsmeßwert QC außerdem ein weiterer Summenladungsmeßwert QC+QD gebildet, der an dem weiteren Meßwertausgang A106b abgegeben und zu der ersten innenliegenden Ladungsmeßeinrichtung 103 übertragen wird.

In der ersten innenliegenden Ladungsmeßeinrichtung 103 liegt nun an dem einen Meßwerteingang E103a der eine Meßwert QA der ersten außenliegenden Ladungsmeßeinrichtung 100 und an dem weiteren Meßwerteingang E103b der weitere Meßwert QC+QD vor. Aus den beiden Meßwerten QA und QC+QD und ihrem eigenen gemessenen Ladungsmeßwert QB wird in der Ladungsmeßeinrichtung 103 der Gesamtladungsmeßwert QA+QB+QC+QD gebildet, und es wird das Fehlersignal gebildet, sobald der Gesamtladungsmeßwert QA+QB+QC+QD den vorgegebenen Mindestschwellenwert $Q_{min}$ und den Gesamtsystemfehler $\Delta Q_{diff}$ überschreitet; das Fehlersignal S wird dann an einem nicht dargestellten Steuerausgang abgegeben. In der Ladungsmeßeinrichtung 103 wird aus dem an dem weiteren Meßwerteingang E103b anliegenden weiteren Meßwert QC+QD und dem eigenen Ladungsmeßwert QB außerdem ein weiterer Summenladungsmeßwert QB+QC+QD gebildet, der an dem weiteren Meßwertausgang A103b zu der ersten außenliegenden Ladungsmeßeinrichtung 100 abgegeben wird.

In der ersten außenliegenden Ladungsmeßeinrichtung 100 liegt nun an dem Meßwerteingang E100b der Meßwert QB+QC+QD der ersten innenliegenden Ladungsmeßeinrichtung 103 vor. Aus dem Meßwert QB+QC+QD und dem eigenen gemessenen Ladungsmeßwert QA wird in der ersten außenliegenden Ladungsmeßeinrichtung 100 der Gesamtladungsmeßwert QA+QB+QC+QD gebildet, und es wird das Fehlersignal gebildet, sobald der Gesamtladungswert QA+QB+QC+QD den vorgegebenen Mindestschwellenwert $Q_{min}$ und den Gesamtsystemfehler $\Delta Q_{diff}$ überschreitet; das Fehlersignal S wird dann an einem nicht dargestellten Steuerausgang abgegeben.

Zusammengefaßt werden also zu jeder der Ladungsmeßeinrichtungen ein Meßwert bzw. zwei Meßwerte übertragen, mit denen jede der Ladungsmeßeinrichtungen in der Lage ist, unter Heranziehung des eigenen Ladungsmeßwertes den Gesamtladungsmeßwert zu ermitteln und das Fehlersignal zu erzeugen.

Über die weitere Datenleitung 115 wird zwischen den beiden außenliegenden Ladungsmeßeinrichtungen 100 und 109 jeweils der Gesamtladungsmeßwert zu Kontrollzwecken übermittelt; dazu wird in den beiden Ladungsmeßeinrichtung geprüft, ob der von der jeweils anderen außenliegenden Ladungsmeßeinrichtung übermittelte Gesamtladungsmeßwert dem eigenen Gesamtladungsmeßwert entspricht. Falls dies nicht der Fall sein sollte, wird ein Alarmsignal erzeugt, das einen Fehler in der Meßanordnung angibt. Ein weiterer Vorteil der weiteren Datenleitung 115 besteht darin, daß die Anordnung gemäß Figur 2 auch dann weiterbetrieben werden kann, wenn eine Datenleitung 112 zwischen zwei benachbarten Ladungsmeßeinrichtungen unterbrochen ist, weil in einem solchen Fall die weitere Datenleitung 115 als Ersatz für die unterbrochene Datenleitung 112 verwendet werden kann.

Die eine und die weitere Recheneinheit können beispielsweise durch eine DV-Anlage bzw. durch eine Mikroprozessoranordnung gebildet sein.

Figur 3 zeigt ein Ausführungsbeispiel für eine Ladungsmeßeinrichtung, wie sie in den Anordnungen gemäß Figur 1 und 2 eingesetzt werden kann; dabei wird für die Erläuterung von der Ladungsmeßeinrichtung 103 gemäß Figur 2 ausgegangen, und es werden zur Vereinfachung des Verständnisses der Figur 3 für bereits im Zusammenhang mit der Figur 2 erläuterte Komponenten in der Figur 3 die gleichen Bezugszeichen wie in der Figur 2 verwendet.

Die Ladungsmeßeinrichtung 103 weist einen Stromeingang I103a und einen weiteren Stromeingang I103b auf, mit denen die Ladungsmeßeinrichtung 103 an das Leiterende 123 der Leitung 130 gemäß Figur 2 angeschlossen ist. Mit den beiden Stromeingängen I103a und I103b ist eine Meßeinheit 73 verbunden, der ein Addierglied 76 als Recheneinheit mit einem Eingang E76a, ein weiteres Addierglied 77 als weitere Recheneinheit mit einem Eingang E77a und eine Steuereinheit 78 mit einem Eingang E78a nachgeordnet ist. Das Addierglied 76 ist mit einem weiteren Eingang E76b mit dem einen Meßwerteingang E103a der Ladungsmeßeinrichtung 103 und mit einem Ausgang A76 mit dem einen Meßwertausgang A103a der Ladungsmeßeinrichtung 103 verbunden.

Das weitere Addierglied 77 ist mit einem weiteren Eingang E77b an den weiteren Meßwerteingang E103b der Ladungsmeßeinrichtung 103 und mit einem Ausgang A77 an den weiteren Meßwertausgang A103b der Ladungsmeßeinrichtung 103 angeschlossen.

Ein weiterer Eingang E78b der Steuereinheit 78 ist an den einen Meßwerteingang E103a der Ladungsmeßeinrichtung 103 angeschlossen; ein zusätzlicher Meßwerteingang E78c der Steuereinheit 78 ist mit dem weiteren Meßwerteingang E103b der Ladungsmeßeinrichtung 103 verbunden.

Mit der Meßeinheit 73 wird der Strom IB' im Leiterende 123 gemessen und ein dem Strom IB' entsprechender Strommeßwert IB gebildet. In der Meßeinheit 73 werden alle Strommeßwerte IB, die während einer vorgegebenen Meßdauer T bzw. während eines vorgegebenen Meßfensters gebildet werden, integriert unter Bildung eines Ladungsmeßwertes QB.

$$QB = \int_{t0}^{t1} IB(t)\ dt$$

(to: Meßfensteranfang, t1: Meßfensterende)

Dieser Ladungsmeßwert QB gibt dann also die Ladung QB' an, die während der Meßdauer T = t1 - to durch das Leiterende 123 geflossen ist.

Die Meßdauer T bzw. die Länge des Meßfensters beträgt dabei $T = \dfrac{1}{f} \cdot \dfrac{1}{4} = 5\ ms$ (bei 50 Hz Wechselstrom), wobei f die Grundfrequenz des Wechselstroms IB' bezeichnet und beispielsweise 50 Hz oder 60 Hz betragen kann. Die Ladungsmessung wird dabei zyklisch wiederholt, wobei sich die Meßfenster überschneiden sollen; konkret werden nämlich besonders gute Ergebnisse beim Erzeugen des Fehlersignals S erreicht, wenn die Meßfenster etwa um 1/8 der Periode des Wechselstroms IB' ( = 45°-Verschiebung) verschoben sind. Unter einer 45°-Verschiebung der Meßfenster wird also verstanden, daß die jeweils nächste Ladungsmessung zeitlich in der Mitte der jeweils vorausgehenden Ladungsmessung erfolgen soll:

$$QB\ (to) = \int_{to-T/2}^{to+T/2} IB(t)\,dt$$

(vorausgehende Messung)

$$QB\ (to + \Delta t) = \int_{to}^{to+T} IB(t)\,dt$$

(jeweils nächste Messung)
Wobei $\Delta t$ den zeitlichen Versatz der Meßfenster und T die Länge der Meßfenster bezeichnet; es soll also gelten:

$$\Delta t = \frac{T}{2} = 2,5\ ms$$

(bei 50 Hz)
Dieser so gebildete Ladungsmeßwert QB gelangt zu der Recheneinheit 76, in der aus diesem und dem einen Ladungsmeßwert QA an dem einen Meßwerteingang E103a ein Summenladungsmeßwert QA+QB gebildet und dieser als Meßwert zu dem einen Meßwertausgang A103a der Ladungsmeßeinrichtung 103 übertragen wird.
Der Ladungsmmeßwert QB gelangt auch zu dem weiteren Recheneinheit 77, in dem aus dem weiteren Meßwert QC+QD an dem weiteren Meßwerteingang E103b der Ladungsmeßeinrichtung 103 und dem Ladungsmeßwert QB ein weiterer Summenladungsmeßwert QB+QC+QD gebildet und als Meßwert an dem weiteren Meßwertausgang A103b der Ladungsmeßeinrichtung 103 abgegeben wird.
Außerdem wird der Ladungsmeßwert QB zu der Steuereinheit 78 übertragen, in der aus dem eigenen Ladungsmeßwert QB, dem einen Meßwert QA und dem weiteren Meßwert QC+QD ein Gesamtladungsmeßwert QA+QB+QC+QD gebildet wird.
In der Steuereinheit 78 wird dieser Gesamtladungsmeßwert QA+...+QD mit einem der Meßsituation angepaßten Schwellenwert verglichen. Überschreitet der Gesamtladungsmeßwert diesen Schwellenwert, so wird an einem Steuersignalausgang S103 der Strommeßeinrichtung 103 ein Signal S abgegeben, das einen Fehlerstrom in der Leitung 130 kennzeichnet. Wie der Vergleich mit dem Schwellenwert im Detail durchgeführt wird, wird nachfolgend beschrieben:

In der Meßeinheit 73 wird darüber hinaus der Meßfehler $\Delta QB$ der Ladungsmeßeinrichtung 103 gebildet gemäß:

$$\Delta QB = k_B \cdot T \cdot \underset{Me\beta \operatorname{int} ervallT}{MAX} \left[ \frac{|IB|}{I_{nenn}} \right] + \Delta Q_{\substack{Integrationsfehler \\ der\ Ladungsme\beta - \\ einrichtung\,103}}$$

wobei $k_B$ (typischerweise = 0,2) die Meßungenauigkeit bzw. Meßtoleranz der Ladungsmeßeinrichtung 103 angibt. T beträgt 5 ms, und $I_{nenn}$ ist ein vorgegebener Nennstrom, der durch den Leiter 6 vorgegeben ist. Der Integrationsfehler hängt von der Art des Integrationsverfahrens ab und ist abhängig von den gemessenen Strommeßwerten IB.

Der Meßfehler ΔQB gelangt zu der Recheneinheit 76, in der er zu dem eingangsseitig anliegenden Meßfehler ΔQA addiert wird. Die Meßfehlersumme ΔQA + ΔQB wird am Meßwertausgang Δ103a der Ladungsmeßeinrichtung 103 abgegeben.

Der Meßfehler ΔQB gelangt auch zu dem weiteren Addierglied 77, in dem zu dem Meßfehler ΔQB die Meßwertsumme ΔQC + ΔQD vom Meßwerteingang E103b hinzugezählt wird. Die Meßwertsumme ΔQB + ΔQC + ΔQD wird am weiteren Meßwertausgang A103b der Ladungsmeßeinrichtung 103 abgegeben.

Darüber hinaus gelangt der Meßfehler ΔQB zu der Steuereinheit 78, in der durch Summenbildung der dort eingangsseitig anliegenden Meßfehler ΔQA, ΔQB, ΔQC und ΔQD ein Gesamtmeßfehler ΔQA + ... +ΔQD gebildet wird.

Mit diesem Gesamtmeßfehler wird dann ein Gesamt-Systemfehler $\Delta Q_{diff}$ in der Steuereinheit 78 gebildet gemäß:

$$\Delta Q_{diff} = \Delta QA + \ldots \Delta QD + \sum_{\substack{alle\ Verbindungen}} \Delta Q diff_{Synchronisierung}$$

wobei $\sum_{alle\ Verbindungen} \Delta Q diff_{Synchronisierung}$ eine in der Steuereinheit 78 fest abgespeicherte Größe ist, die den durch fehlerhafte Synchronisierung zwischen den Ladungsmeßgeräten verursachten Fehler angibt.

$\sum_{alle\ Verbindungen} \Delta Q diff_{Synchronisierung}$ kann aber auch in der Steuereinheit 78 gebildet werden, wie folgt:

$$\sum_{\substack{alle\ Verbindungen}} \Delta Q diff_{Synchronisierung} = k_{sync} \cdot \Delta T_{sync} \cdot (\Delta QA + \ldots + \Delta QD)$$

wobei $\Delta T_{synch}$ den geschätzten und in der Steuereinheit 78 abgespeicherten, maximalen zeitlichen Synchronisierungsfehler zwischen den einzelnen Taktsignalen $T_A$ bezeichnet und wobei $k_{sync}$ ein Faktor ist, der beispielsweise wie folgt berechnet werden kann:

$$k_{sync} = \frac{1}{T \cdot Min(Me\beta ungenauigkeiten\ aller\ beteiligten\ Ladungsme\beta ger\ddot{a}te)}$$

Beträgt T = 5 ms und die minimale Meßungenauigkeit (Meßtoleranz) der beteiligten Ladungsmeßeinrichtungen (Bezugszeichen 30, 33, 36, 39 und 42 in Figur 1 und Bezugszeichen 100, 103, 106 und 109 in Figur 2) 0,2, so beträgt $k_{sync}$ also 1000 l/s.

Anschließend wird das Fehlersignal S gebildet, wenn der Gesamtladungsmeßwert QA+...QD größer ist als die

fest vorgegebene Mindestschwelle $Q_{min}$ und größer ist als der Gesamtsystemfehler ∆Qdiff.

Die Strommeßeinrichtung 103 weist außerdem einen Anschluß $Q_1$ auf, der mit der Steuereinheit 78 verbunden ist. Falls die Strommeßeinrichtung 103 als außenliegende Strommeßeinrichtung 100 bzw. 109 gemäß Figur 2 betrieben werden soll, kann die Strommeßeinrichtung über diesen Anschluß Q1 mit der jeweils anderen außenliegenden Strommeßeinrichtung über die weitere Datenleitung 115 zur Übertragung des Gesamtladungswertes QA+...+QD verbunden werden. In der Steuereinheit 78 wird dann verglichen, ob der eigene Gesamtladungswert gleich dem übertragenen Gesamtladungsmeßwert der anderen außenliegenden Strommeßeinrichtung ist. Falls dies nicht der Fall sein sollte, wird an einem weiteren Anschluß Q2 ein Alarmsignal A abgegeben, das angibt, daß ein Fehler in der Meßanordnung aufgetreten ist.

Die Strommeßeinrichtung 103 weist einen Takteingang T103 auf, mit dem sie an einen Taktgenerator angeschlossen ist. Die Bildung der Strommeßwerte IB und der Ladungsmeßwerte QB erfolgt damit zeitlich synchron mit den übrigen Ladungsmeßeinrichtungen gemäß Figur 1 und 2. Die Taktsynchronisation kann auch auf andere Weise über die Datenleitungen erfolgen, beispielsweise über Datenleitungen wie in der eingangs genannten Druckschrift ( z. B. Ping-Pong-Verfahren) beschrieben.

Die eine und die weitere Recheneinheit 76 und 77 sowie die Steuereinheit 78 können durch eine DV-Anlage, beispielsweise eine Mikroprozessoranordnung gebildet sein.

**Patentansprüche**

1. Verfahren zum Erzeugen eines einen Fehlerstrom eines mindestens zwei Leiterenden (120, 123, 126, 129) aufweisenden elektrischen Leiters (130) kennzeichnenden Fehlersignals mit Ladungsmeßeinrichtungen (100, 103, 106, 109), die über Datenleitungen (112) untereinander verbunden sind und von denen an jedem Leiterende des Leiters jeweils eine angebracht ist, wobei bei dem Verfahren

   - mit den Ladungsmeßeinrichtungen (100, 103, 106, 109) Ladungsmeßwerte gemessen werden, die jeweils die durch das jeweilige Leiterende (120, 123, 126, 129) während einer vorgegebenen Meßdauer geflossene Ladungsmenge angeben,
   - mit den Ladungsmeßwerten unter Berücksichtigung der Richtung des Ladungsflusses durch Addition ein Gesamtladungsmeßwert gebildet wird und
   - das Fehlersignal erzeugt wird, wenn der Gesamtladungsmeßwert betragsmäßig einen an die jeweilige Meßsituation angepaßten Schwellenwert überschreitet,

   **dadurch gekennzeichnet, daß**

   - der an die jeweilige Meßsituation angepaßte Schwellenwert unter Berücksichtigung der individuellen Meßtoleranz der einzelnen Ladungsmeßeinrichtungen (100, 103, 106, 109) gebildet wird, indem
   - mit den Ladungsmeßeinrichtungen (100, 103, 106, 109) zunächst der durch die jeweiligen Leiterenden (120, 123, 126, 129) fließende Strom gemessen wird und
   - durch analoge oder digitale Integration der dabei gebildeten Strommeßwerte über die Meßdauer jeweils die Ladungsmeßwerte gebildet werden,
   - für jedes Leiterende (120, 123, 126, 129) jeweils der maximale Strommeßwert innerhalb der Meßdauer bestimmt wird,
   - die maximalen Strommeßwerte jeweils mit einem die Meßdauer angebenden Meßdauer-Wert unter Bildung fiktiver momentaner Maximalladungsmeßwerte multipliziert werden,
   - die Beträge der Maximalladungsmeßwerte jeweils mit der individuellen Meßtoleranz der jeweiligen Ladungsmeßeinrichtung (100, 103, 106, 109) gewichtet und unter Bildung eines Gesamtstrommeßfehlers aufsummiert werden und
   - der Schwellenwert derart gewählt wird, daß er stets mindestens so groß ist wie der Gesamtstrommeßfehler.

2. Verfahren nach Anspruch 1,
   **dadurch gekennzeichnet, daß**

   - der durch die Integration der Strommeßwerte auftretende Integrationsfehler in jeder der Ladungsmeßeinrichtungen (100, 103, 106, 109) aufsummiert wird,
   - der resultierende Gesamtintegrationsfehler zu dem Gesamtstrommeßfehler unter Bildung eines Gesamtmeßfehlers addiert wird und
   - der Schwellenwert derart gewählt wird, daß er stets mindestens so groß ist wie der Gesamtmeßfehler.

**3.** Verfahren nach Anspruch 2,
**dadurch gekennzeichnet, daß**

- der durch fehlerhafte Synchronisation der Ladungsmeßeinrichtungen (100, 103, 106, 109) maximal auftretende Synchronisationsfehler ermittelt wird,
- der resultierende Synchronisationsfehler zu dem Gesamtmeßfehler unter Bildung eines Gesamt-Systemfehlers addiert wird und
- der Schwellenwert derart gewählt wird, daß er stets mindestens so groß ist wie der Gesamt-Systemfehler.

**4.** Verfahren nach Anspruch 3,
**dadurch gekennzeichnet, daß**

- das Fehlersignal erzeugt wird, wenn der Gesamtladungsmeßwert

- einen fest vorgegebenen Mindestschwellenwert und
- den Gesamtsystemfehler überschreitet.

**5.** Verfahren nach einem der vorangehenden Ansprüche,
**dadurch gekennzeichnet, daß**

- die Messung der Ladungsmeßwerte in der Weise regelmäßig wiederholt wird, daß der zeitliche Abstand zwischen jeweils zwei aufeinander folgenden Messungen kleiner ist als die vorgegebene Meßdauer.

**6.** Verfahren nach Anspruch 5,
**dadurch gekennzeichnet, daß**

- die vorgegebene Meßdauer derart bemessen ist, daß sie kleiner ist als die halbe Periodendauer des Stroms.

**7.** Verfahren nach Anspruch 6,
**dadurch gekennzeichnet, daß**

- die vorgebene Meßdauer etwa einem Viertel der Periodendauer des Stroms entspricht.

**8.** Verfahren nach Anspruch 7,
**dadurch gekennzeichnet, daß**
der zeitliche Abstand zwischen jeweils zwei aufeinander folgenden Messungen etwa halb so groß ist wie die vorgegebene Meßdauer.

**9.** Verfahren nach einem der vorangehenden Ansprüche,
**dadurch gekennzeichnet, daß**

- bei einem Leiter (130) mit mindestens drei Leiterenden (120, 123, 126, 129) zu einer ausgewählten Ladungsmeßeinrichtung (109) ein Zwischenwert (QA+QB+QC) übertragen wird, der aus den Ladungsmeßwerten der übrigen Ladungsmeßeinrichtungen (100, 103, 106) durch Addition vorab gebildet ist, und
- der Gesamtladungsmeßwert (QA+QB+QC+QD) mit dem Ladungsmeßwert (QD) der ausgewählten Ladungsmeßeinrichtung (109) und mit dem Zwischenwert(QA+QB+QC) durch Addition gebildet wird.

**10.** Verfahren nach einem der Ansprüche 1 bis 8,
**dadurch gekennzeichnet, daß**
bei einem Leiter (6) mit mindestens drei Leiterenden (9, 12, 15, 18, 21)

- zu der ausgewählten Ladungsmeßeinrichtung (30) zwei Zwischenwerte übertragen werden, und zwar

- ein erster, der aus den Ladungsmeßwerten (QB+QC) einer ersten Gruppe der übrigen Ladungsmeßeinrichtungen (33, 36) durch Addition gebildet ist, und
- ein zweiter Zwischenwert (QD+QE), der aus den Ladungsmeßwerten einer zweiten Gruppe der übrigen Ladungsmeßeinrichtungen (39, 42) durch Addition gebildet ist, wobei die zweite Gruppe alle Ladungsmeßeinrichtungen (39, 42) außer der ausgewählten Ladungsmeßeinrichtung (30) und den Ladungsmeßeinrichtungen (33, 36) der ersten Gruppe enthält,

- der Gesamtladungsmeßwert (QA+QB+QC+QD+QE) mit dem Ladungsmeßwert (QA) der ausgewählten Ladungsmeßeinrichtung (30) und den beiden Zwischenwerten (QB+QC, QD+QE) durch Addition gebildet wird.

11. Verfahren nach einem der vorangehenden Ansprüche,
**dadurch gekennzeichnet, daß**

- bei einem Leiter (130) mit mindestens drei Leiterenden (120, 123, 126, 129) zu einer ausgewählten Ladungsmeßeinrichtung (109) ein Fehlerzwischenwert ($\Delta$QA+$\Delta$QB+$\Delta$QC) übertragen wird, der aus den Meßfehlern der übrigen Ladungsmeßeinrichtungen durch Addition vorab gebildet ist, und
- der Gesamtmeßfehler ($\Delta$QA+$\Delta$QB+$\Delta$QC+$\Delta$QD) mit dem Meßfehler ($\Delta$QD) der ausgewählten Ladungsmeßeinrichtung (109)und mit dem Fehlerzwischenwert ($\Delta$QA+$\Delta$QB+$\Delta$QC) durch Addition gebildet wird.

12. Verfahren nach einem der Ansprüche 1 bis 10,
**dadurch gekennzeichnet, daß** bei einem Leiter (6) mit mindestens drei Leiterenden (9, 12, 15, 18, 21)

- zu der ausgewählten Ladungsmeßeinrichtung (30) zwei Fehlerzwischenwerte übertragen werden, und zwar

- ein erster, der aus den Meßfehlern ($\Delta$QB+$\Delta$QC) einer ersten Gruppe der übrigen Ladungsmeßeinrichtungen (33, 36) durch Addition gebildet ist, und
- ein zweiter Fehlerzwischenwert ($\Delta$QD+$\Delta$QE), der aus den Meßfehlern einer zweiten Gruppe der übrigen Ladungsmeßeinrichtungen (39, 42) durch Addition gebildet ist, wobei die zweite Gruppe alle Ladungsmeßeinrichtungen (39, 42) außer der ausgewählten Ladungsmeßeinrichtung (30) und den Ladungsmeßeinrichtungen (33, 36) der ersten Gruppe enthält,

- der Gesamtmeßfehler ($\Delta$QA+$\Delta$QB+$\Delta$QC+$\Delta$QD+$\Delta$QE) mit dem Meßfehler ($\Delta$QA) der ausgewählten Ladungsmeßeinrichtung (30) und den beiden Fehlerzwischenwerten ($\Delta$QB+$\Delta$QC, $\Delta$QD+$\Delta$QE) durch Addition gebildet wird.

**Claims**

1. Method for producing a fault signal which characterizes a fault current in an electrical conductor (130) having at least two conductor ends (120, 123, 126, 129), with charge measurement devices (100, 103, 106, 109) which are connected to one another via data lines (112) and of which one is in each case fitted to each conductor end of the conductor with, in the case of the method,

- the charge measurement devices (100, 103, 106, 109) being used to measure charge measurement values which each indicate the amount of charge which has flowed through the respective conductor end (120, 123, 126, 129) during a predetermined measurement duration,
- the charge measurement values being used to form an overall charge measurement value, taking account of the direction of the charge flow by addition, and
- the fault signal being produced if the magnitude of the overall charge measurement value exceeds a threshold value which is matched to the respective measurement situation,

**characterized in that**

- the threshold value is formed, matched to the respective measurement situation, taking into account the individual measurement tolerance of the individual charge measurement devices (100, 103, 106, 109), in which
- the charge measurement devices (100, 103, 106, 109) are first of all used to measure the current flowing through the respective conductor ends(120, 123, 126, 129), and
- the charge measurement values are in each case formed by analog or digital integration of the current measurement values formed in this case, over the measurement duration,
- the respective maximum current measurement value within the measurement duration is determined for each conductor end (120, 123, 126, 129),
- the maximum current measurement values are each multiplied by a measurement duration value which indicates the measurement duration, in order to form fictional instantaneous maximum charge measurement values,

- the magnitudes of the maximum charge measurement values are each weighted with the individual measurement tolerance of the respective charge measurement device (100, 103, 106, 109) and are added up to form an overall current measurement error, and
- the threshold value is chosen such that it is always at least as great as the overall current measurement error.

**2.** Method according to Claim 1,
**characterized in that**

- the integration error which occurs due to the integration of the current measurement values in each of the charge measurement devices (100, 103, 106, 109) is added up,
- the resultant overall integration error is added to the overall current measurement error to form an overall measurement error, and
- the threshold value is chosen such that it is always at least as great as the overall measurement error.

**3.** Method according to Claim 2,
**characterized in that**

- the maximum synchronization error which occurs as a result of incorrect synchronization of the charge measurement devices (100, 103, 106, 109) is determined,
- the resultant synchronization error is added to the overall measurement error to form an overall system error, and
- the threshold value is chosen such that it is always at least as great as the overall system error.

**4.** Method according to Claim 3,
**characterized in that**

- the fault signal is produced if the overall charge measurement value exceeds

    - a fixedly predetermined minimum threshold value, and
    - the overall system error.

**5.** Method according to one of the preceding claims,
**characterized in that**

- the measurement of the charge measurement values is repeated regularly in such a way that the time interval between two respectively successive measurements is shorter than the predetermined measurement duration.

**6.** Method according to Claim 5,
**characterized in that**

- the predetermined measurement duration is dimensioned such that it is shorter than half the period duration of the current.

**7.** Method according to Claim 6,
**characterized in that**
the predetermined measurement duration corresponds to approximately one quarter of the period duration of the current.

**8.** Method according to Claim 7,
**characterized in that**
the time interval between two respectively successive measurements is approximately half as great as the predetermined measurement duration.

**9.** Method according to one of the preceding claims,
**characterized in that**

- in the case of a conductor (130) having at least three conductor ends (120, 123, 126, 129), an intermediate value (QA+QB+QC) which is formed by addition in advance from the charge measurement values of the other charge measurement devices (100, 103, 106) is transmitted to a selected charge measurement device (109), and

- the overall charge measurement value (QA+QB+QC+QD) is formed by addition from the charge measurement value (QD) of the selected charge measurement device (109) and the intermediate value (QA+QB+QC).

10. Method according to one of Claims 1 to 8,
**characterized in that**
in the case of a conductor (6) having at least three conductor ends (9, 12, 15, 18, 21),

- two intermediate values are transmitted to the selected charge measurement device (30), to be precise

    - a first, which is formed by addition from the charge measurement values (QB+QC) of a first group of the other charge measurement devices (33, 36), and
    - a second intermediate value (QD+QE), which is formed by addition from the charge measurement values of a second group of the other charge measurement devices (39, 42), with the second group containing all the charge measurement devices (39, 42) apart from the selected charge measurement device (30) and the charge measurement devices (33, 36) in the first group,

- the overall charge measurement value (QA+QB+QC+QD+QE) is formed by addition from the charge measurement value (QA) of the selected charge measurement device (30) and the two intermediate values (QB+QC, QD+QE).

11. Method according to one of the preceding claims,
**characterized in that**

- in the case of a conductor (130) having at least three conductor ends (120, 123, 126, 129), an intermediate error value ($\Delta$QA+$\Delta$QB+$\Delta$QC) which is formed in advance by addition from the measurement errors of the other charge measurement device is transmitted to a selected charge measurement device (109), and
- the overall measurement error ($\Delta$QA+$\Delta$QB+$\Delta$QC+$\Delta$QD) is formed by addition from the measurement error ($\Delta$QD) of the selected charge measurement device (109) and the intermediate error value ($\Delta$QA+$\Delta$QB+$\Delta$QC).

12. Method according to one of Claims 1 to 10,
**characterized in that**
in the case of a conductor (6) having at least three conductor ends (9, 12, 15, 18, 21),

- two intermediate error values are transmitted to the selected charge measurement device (30), to be precise

    - a first, which is formed by addition from the measurement errors ($\Delta$QB+$\Delta$QC) of a first group of the other charge measurement devices (33, 36), and
    - a second intermediate error value ($\Delta$QD+$\Delta$QE), which is formed by addition from the measurement errors of a second group of the other charge measurement devices (39, 42),
    with the second group containing all the charge measurement devices (39, 42) apart from the selected charge measurement device (30) and the charge measurement devices (33, 36) in the first group,
    - the overall measurement error ($\Delta$QA+$\Delta$QB+$\Delta$QC+$\Delta$QD+$\Delta$QE) is formed by addition from the measurement error ($\Delta$QA) of the selected charge measurement device (30) and the two intermediate error values ($\Delta$QB+$\Delta$QC, $\Delta$QD+$\Delta$QE).

**Revendications**

1. Procédé de production d'un signal d'erreur caractérisant un courant de défaut d'un conducteur ( 130 ) électrique ayant au moins deux extrémités ( 120, 123, 126, 129 ), comprenant des dispositifs (100, 103, 106, 109) de mesure de charge, qui sont reliés entre eux par des lignes ( 112 ) de données et dont l'un respectivement est appliqué à chaque extrémité du conducteur, dans lequel dans le procédé

- on mesure, par les dispositifs ( 100, 103, 106, 109 ) de mesure de charge, des valeurs de mesure de charge, qui indiquent respectivement la quantité de charge, qui est passée dans l'extrémité ( 120, 123, 126, 129 ) respective du conducteur pendant une durée de mesure prescrite,
- on forme, avec les valeurs de mesure de charge, en tenant compte de la direction du flux de charge, par addition, une valeur globale de mesure de charge, et

- on produit le signal d'erreur, si la valeur globale de mesure de charge dépasse en valeur absolue une valeur de seuil adaptée à la situation respective de mesure,

**caractérisé en ce que**

- on forme la valeur de seuil adaptée à la situation respective de mesure en tenant compte des tolérances individuelles de mesure des divers dispositifs ( 100, 103, 106, 109 ) de mesure de charge, en
- mesurant par les dispositifs ( 100, 103, 106, 109 ) de mesure de charge, d'abord le courant passant dans les extrémités ( 120, 123, 126, 129 ) respectives du conducteur, et
- en formant, par intégration analogique ou numérique des valeurs de mesure du courant ainsi formées sur la durée de mesure, respectivement les valeurs de mesure de charge,
- en déterminant, pour chaque extrémité ( 120, 123, 126, 129 ) du conducteur, respectivement la valeur maximum de mesure du courant dans la durée de mesure,
- en multipliant les valeurs maximum de mesure du courant, respectivement, par une valeur de durée de mesure indiquant la durée de mesure, en formant des valeurs de mesure de charge maximum instantanées fictives,
- en pondérant les valeurs absolues des valeurs de mesure de charge maximum, respectivement, par les tolérances de mesure individuelles du dispositif ( 100, 103, 106, 109 ) de mesure de charge respectif, et en les sommant en formant une erreur globale de mesure du courant, et
- en choisissant la valeur de seuil, de manière à ce qu'elle soit toujours au moins aussi grande que l'erreur globale de mesure du courant.

2. Procédé suivant la revendication 1,
   **caractérisé en ce que**

   - on somme les erreurs d'intégration se produisant par l'intégration des valeurs de mesure du courant dans chacun des dispositifs ( 100, 103, 106, 109 ) de mesure de charge,
   - on additionne l'erreur globale d'intégration obtenue à l'erreur globale de mesure du courant, en formant une erreur de mesure globale, et
   - on choisit la valeur de seuil, de manière à ce qu'elle soit toujours au moins aussi grande que l'erreur globale de mesure.

3. Procédé suivant la revendication 2,
   **caractérisé en ce que**

   - on détermine l'erreur de synchronisation se produisant au maximum par synchronisation défectueuse des dispositifs ( 100, 103, 106, 109 ) de mesure de charge,
   - on additionne l'erreur de synchronisation qui s'ensuit à l'erreur globale de mesure, en formant une erreur globale de système, et
   - on choisit la valeur de seuil, de manière à ce qu'elle soit toujours au moins aussi grande que l'erreur globale de système.

4. Procédé suivant la revendication 3,
   **caractérisé en ce que**

   - on produit le signal d'erreur, si la valeur globale de mesure de charge

     - dépasse une valeur de seuil minimum prescrite de manière fixe et
     - dépasse l'erreur globale de système.

5. Procédé suivant l'une des revendications précédentes,
   **caractérisé en ce que**

   - on répète régulièrement la mesure des valeurs de mesure de charge, de manière à ce que le laps de temps entre respectivement deux mesures qui se succèdent soit plus petit que la durée de mesure prescrite.

6. Procédé suivant la revendication 5,
   **caractérisé en ce que**

- on fait en sorte que la durée de mesure prescrite soit plus petite que la demi-période du courant.

7. Procédé suivant la revendication 6,
   **caractérisé en ce que**

   - la durée de mesure prescrite correspond à peu près au quart de la période du courant.

8. Procédé suivant la revendication 7,
   **caractérisé en ce que**
   le laps de temps de respectivement deux mesures qui se succèdent représente à peu près la moitié de la durée de mesure prescrite.

9. Procédé suivant l'une des revendications précédentes,
   **caractérisé en ce que**

   - pour un conducteur ( 130 ) ayant au moins trois extrémités ( 120, 123, 126, 129 ), on transmet à un dispositif ( 109 ) de mesure de charge sélectionné une valeur ( QA+QB+QC ) intermédiaire, qui est formée à partir des valeurs de mesure de charge des autres dispositifs ( 100, 103, 106 ) de mesure de charge par addition préalable, et
   - on forme la valeur ( QA+QB+QC+QD ) globale de charge par addition avec la valeur ( QD ) de mesure de charge du dispositif ( 109 ) de mesure de charge sélectionné et avec la valeur ( QA+QB+QC ) intermédiaire.

10. Procédé suivant l'une des revendications 1 à 8,
    **caractérisé en ce que**, pour un conducteur ( 6 ) ayant au moins trois extrémités ( 9, 12, 15, 18, 21 ),

    - on transmet deux valeurs intermédiaires au dispositif ( 30 ) de mesure de charge sélectionné, et en fait
    - une première valeur intermédiaire, qui est formée par addition à partir des valeurs ( QB+QC ) de mesure de charge d'un premier groupe des autres dispositifs ( 33, 36 ) de mesure de charge, et
    - une deuxième valeur ( QD+QE ) intermédiaire, qui est formée par addition à partir des valeurs de mesure de charge d'un deuxième groupe des autres dispositifs ( 39, 42 ) de mesure de charge, le deuxième groupe contenant tous les dispositifs ( 39, 42 ) de mesure de charge à l'exception du dispositif ( 30 ) de mesure de charge sélectionné et les dispositifs ( 33, 36 ) de mesure de charge du premier groupe,
    - on forme par addition la valeur ( QA+QB+QC+QD+QE ) globale de mesure de charge avec la valeur ( QA ) de mesure de charge du dispositif ( 30 ) de mesure de charge sélectionné et avec les deux valeurs ( QB+QC, QD+QE ) intermédiaires.

11. Procédé suivant l'une des revendications précédentes, **caractérisé en ce que**

    - pour un conducteur ( 130 ) ayant au moins trois extrémités ( 120, 123, 126, 129 ), on transmet à un dispositif ( 109 ) de mesure de charge sélectionné une valeur ( $\Delta QA+\Delta QB+\Delta QC$ ) intermédiaire d'erreur, qui est formée au préalable par addition à partir des erreurs de mesure des autres dispositifs de mesure de charge, et
    - on forme par addition l'erreur ( $\Delta QA+\Delta QB+\Delta QC+\Delta QD$ ) globale de mesure avec l'erreur ( $\Delta QD$ ) de mesure du dispositif ( 109 ) de mesure de charge sélectionné et avec la valeur ( $\Delta QA+\Delta QB+\Delta QC$ ) intermédiaire d'erreur.

12. Procédé suivant l'une des revendications 1 à 10,
    **caractérisé en ce que**, pour un conducteur ( 6 ) ayant au moins trois extrémités ( 9, 12, 15, 18, 21 ),

    - on transmet deux valeurs intermédiaires d'erreur au dispositif ( 30 ) de mesure de charge sélectionné, et en fait

       - une première valeur intermédiaire, qui est formée par addition à partir des valeurs ( $\Delta QB+\Delta QC$ ) intermédiaires d'erreur d'un premier groupe des autres dispositifs ( 33, 36 ) de mesure de charge, et
       - une deuxième valeur ( $\Delta QD+\Delta QE$ ) intermédiaire d'erreur, qui est formée par addition à partir des valeurs de mesure de charge d'un deuxième groupe des autres dispositifs ( 39, 42 ) de mesure de charge, le deuxième groupe contenant tous les dispositifs ( 39, 42 ) de mesure de charge à l'exception du dispositif ( 30 ) de mesure de charge sélectionné et les dispositifs ( 33, 36 ) de mesure de charge du premier groupe,

    - on forme par addition l'erreur ( $\Delta QA+\Delta QB+\Delta QC+\Delta QD+\Delta QE$ ) globale de mesure de charge avec l'erreur ( $\Delta QA$ ) de mesure de charge du dispositif ( 30 ) de mesure de charge sélectionné et avec les deux valeurs

( $\Delta$QB+$\Delta$QC, $\Delta$QD+$\Delta$QE ) intermédiaires d'erreur.

# Fig.1

# Fig.2

# Fig.3

# EP 1 236 258 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4939617 A

**In der Beschreibung aufgeführte Nicht-Patentliteratur**

- **Ernst ; Hinman ; Quam ; Thorp.** *IEEE Transaction on Power Delivery,* Oktober 1992, vol. 7 (4), 1834-1846